# EUROPEAN PATENT APPLICATION

(11) **EP 1 838 076 A1**
(43) Date of publication of application: **26.09.2007**
(21) Application number: 06251586.1
(22) Date of filing: 24.03.2006
(51) Int. Cl.: H04M 3/42

(54) **Computer telephony system, method and server**

(71) Applicant: BRITISH TELECOMMUNICATIONS public limited company, London EC1A 7AJ (GB)
(72) Inventor: The designation of the inventor has not yet been filed
(74) Representative: Cardus, Alan Peter

(57) **Abstract**

A controller in a computer telephony system records a mapping linking a key and the identifier of a communications terminal previously associated with a user. The key selected by the controller is a parameter associated with the user in a second system external to the computer telephony system. The controller operates to receive a message from the second system comprising a command issued by the user and the key. The controller reads the received key and uses it to retrieve the identifier and then forwards the command together with the identifier to a communications controller for controlling operation of the communications terminal.

## Description

This invention relates to computer telephony integration (CTI) and to a system and method providing for control of a communications terminal in a computer telephony system.

Computer telephony allows a user to control, from their networked computer terminal, telephony activity related to a telephony terminal nominated by the user: typically the telephone on their desk. The kind of telephony activity controlled in this way typically includes the initiation of calls from the telephone and the logging of calls to/from the telephone (i.e. allowing the user to redial outgoing calls or to respond to missed calls).

Examples of computer telephony environments are disclosed in the articles "Introduction to Computer Telephony Integration", by A. Catchpole, G. Crook, and D. Chesterman, British Telecommunications Engineering, July 1995; "Computer Telephony Integration - The Meridian Norstar", by A. Catchpole, British Telecommunications Engineering, Oct. 1995; "Computer Telephony Integration - The Meridian 1 PBX", by P. Johnson, A. Catchpole, and L. Booton, British Telecommunications Engineering, July 1996; "Callscape - Computer Telephony Integration for the Small Business", by G. Hillson, G. Hardcastle, and M. Allington, British Telecommunications Engineering, Jan. 1997, and "Call Centres - Doing Business by Telephone" by M. Bonner, British Telecommunications Engineering, July 1994.

Computer telephony is particularly useful in call centres, and International Application Number PCT/GB96/00727 (Publication Number WO 96/31044) in the name of British Telecommunications public limited company discloses an automatic call distribution (ACD) suite in a call centre such as BT's national telephone account management operation.

Computer telephony is also a valuable contribution to the digital networked economy adding integrated telephony functionality to email and other electronic communications in the modern, networked organisation. To support computer telephony, the Click Dial (CD) service from British Telecommunications allows the secure registration of a telephony terminal with a computer terminal by means of a cookie. This CD cookie, generated by BT's computer telephony system "iBridge" via a secure registration technique, is an encoded version of the telephone terminal identity. In order to change the associated telephony terminal, re-registration is needed and a new CD cookie is generated which replaces the original. According to this system, the iBridge registration server restricts control of a telephony terminal to a user with a valid CD cookie. The only way to get a valid CD cookie is by registering with the registration server. Click Dial provides the user with the ability to control their allocated telephone by sending commands to the switch to which the telephone is connected. The switch can control the telephone in response to the command by setting up an out-going call from the telephone or causing other desired behaviour on the part of the telephone. An outgoing call may be set up by the switch setting up an initial call to the telephone and, once the user has answered that call, holding the line while setting up a second call to the desired destination indicated by the user.

European patent 1068717 in the name of British Telecommunications public limited company discloses a method of registering the identity of a communications terminal in association with the identity of a computer terminal, the method comprising the steps of: providing to a user of the computer terminal, via that computer terminal, with the identity of a predetermined destination terminal number; answering a call made to that predetermined destination terminal number; receiving at that predetermined destination terminal number the identity of a communications terminal from which that call was made; providing to the user, via that computer terminal, a codeword; receiving, at that predetermined destination terminal, data provided by the user via that telephone terminal; comparing the received data with the provided codeword; and if there is a match, registering the identity of that communications terminal in association with the identity of that computer terminal.

The above patent also discloses a system for registering the identity of a communications terminal in association with the identity of a computer terminal, the system comprising: means to provide to a user of the computer terminal, via that computer terminal, the identity of a predetermined destination terminal number; means to answer a call made to that predetermined destination terminal number; means to receive the identity of a telephone terminal from which that call was made; means to provide to the user, via that computer terminal, a codeword; means to receive data provided by the user via that telephone terminal; means to compare the received data with the provided codeword; and means responsive to a match between the received data and the provided codeword to register the received identity of that telephone terminal in association with the identity of that computer terminal. Once the correct association has been established between the computer terminal and the telephone terminal, the web browser used to interact with the registration server delivers a "cookie" to the computer. The CD cookie holds the information needed to associate the computer and telephone.

Computer telephony may be exercised via a third-party system, such as an email/ web server. Microsoft OC is a client that, working through the Microsoft LCS server, can allow the user to gain control, via the BT iBridge computer telephony system, of a telephony terminal connected to a PBX, however, this system provides no security as to which telephony terminal the user actually controls. As a result, the user could inadvertently or maliciously originate calls from a telephony terminal allocated to another user.

Copending patent application EP 05257448 - "Computer Telephony System" in the name of British Telecommunications public limited company, sets out an arrangement in which a registration key (which performs a similar function to a CD cookie) is provided to the Microsoft LCS/OC system, where it is stored in place of the corresponding directory number (DN). According to this arrangement, only the ibridge system, independently of the third-party system, understands how to translate this registration key back into the DN. This means that a user cannot inadvertently or maliciously take control of someone else's telephone simply by knowing the DN of that telephone. If the user attempted to change the registration key value, there is a very high probability of it becoming invalid, rather than replicating by chance a valid registration key from another user. The registration key comprises typically 32 numeric digits.

If the user changes desk, i.e. moves to another phone, then a re-registration would be required, and a new registration key sent to the Microsoft environment.

The above arrangement is very effective in adding security to computer telephony operations carried out via a third-party system, such as the Microsoft environment.

However, the writing of a registration key to the third-party system may involve complex authorisation or be rendered impractical due to security issues.
All references to earlier documents are given here for the purposes of providing background to the present invention and are not to be taken as an indication that the content of these documents constitutes common general knowledge.

The invention relates to control of a communications terminal in a computer-telephony integration (CTI) system. The present invention allows control of the operation of a communications terminal via third-party systems such as the Microsoft Live Communications Server (LCS) Office Communicator (OC) system without write access by the computer telephony controller to the third-party system while maintaining security from inadvertent or malicious misuse.

The present invention provides a method of operating a computer telephony controller in a computer telephony system comprising a plurality of communications terminals in which each communications terminal has an identifier; the method including the steps of selecting a key and recording in the computer telephony controller a mapping linking the key with the identifier of a communications terminal; in which the communications terminal is associated with a user; in which the selected key is a parameter associated with the user in a second system external to the computer telephony system and accessible by the user; so that the user may exercise control over the communications terminal via the second system.

According to an aspect of the invention the method includes the steps of receiving a message from the second system in which the message comprises a command issued by the user and the key; reading the key received in the message; retrieving the identifier linked to the received key; and forwarding the command and the identifier to a communications controller for controlling operation of the communications terminal.

The present invention also provides a method of operating a computer telephony controller in a computer telephony system comprising a communications controller and a plurality of communications terminals in which each communications terminal has an identifier; the method including the steps of selecting a key and recording a mapping linking the key with the identifier of a communications terminal; in which the communications terminal is associated with a user; in which the selected key is a parameter associated with the user in a second system external to the computer telephony system and accessible by the user; the method including the steps of receiving a message from the second system in which the message comprises a command issued by the user and the key; reading the key received in the message; retrieving the identifier linked to the received key; and forwarding the command and the identifier to the communications controller for controlling operation of the communications terminal.

The present invention also provides a method of operating a computer telephony controller in a computer telephony system comprising a communications controller and a plurality of communications terminals in which each communications terminal has an identifier; the method including the steps of selecting a key or plurality of keys and recording a mapping linking the key or keys with the identifier of a communications terminal; in which the communications terminal is associated with a user; in which the selected key is a parameter or the selected keys are parameters associated with the user in a plurality of systems external to the computer telephony system and accessible by the user; the method including the steps of receiving a message from one of the external systems in which the message comprises a command issued by the user and the key or one of the keys, as the case may be; reading the key received in the message; retrieving the identifier linked to the received key; and forwarding the command and the identifier to the communications controller for controlling operation of the communications terminal.

The present invention also provides a computer telephony controller comprising means for selecting a key and recording a mapping linking the key with the identifier of a communications terminal; in which the communications terminal is associated with a user; in which the selected key is a parameter associated with the user in a second system external to the computer telephony system and accessible by the user; in which the computer telephony controller comprises means for receiving a message from the second system in which the message comprises a command issued by the user and the key; means for reading the key received in the message; retrieving the identifier linked to the received key; and forwarding the command and the identifier to a communications controller for controlling operation of the communications terminal.

The present invention also provides a computer telephony controller comprising means for selecting a key or plurality of keys and recording a mapping linking the key or keys with the identifier of a communications terminal; in which the communications terminal is associated with a user; in which the selected key is a parameter or the selected keys are parameters associated with the user in a plurality of systems external to the computer telephony system and accessible by the user; in which the computer telephony controller comprises means for receiving a message from one of the external systems in which the message comprises a command issued by the user and the key or one of the keys, as the case may be; means for reading the key received in the message; retrieving the identifier linked to the received key; and forwarding the command and the identifier to a communications controller for controlling operation of the communications terminal.

According to various aspects of the invention, the key is or the keys are: a user identifier in the second or other external system; a component of messages relating to the user received from the second or other external system and a SIP URI associated with the user in the second or other external system. In order that a user may exercise control over different communications terminals at different times via the second system, according to a further aspect, the method includes changing the mapping so as to link the key with the identifier of a second communications terminal.

The present invention also provides a server for communicating with a communications controller connected to a communications terminal in which the server comprises a key linked to a user; in which the server also comprises means for receiving from the user a command and means for forwarding the command and the key to the communications controller via a system for translation of the key into the identifier of the communications terminal so that the user is able to control the communications terminal via the server.

According to various aspects of the invention, the key is: suitable to be processed by the server as a communications terminal identifier; suitable to be stored in the server in a directory number database; a user identifier in the second system; a component of messages relating to the user received from the second system; a SIP URI associated with the user.

The invention will now be described by way of example only with reference to the drawings. The embodiments described include the best mode known to the inventor.

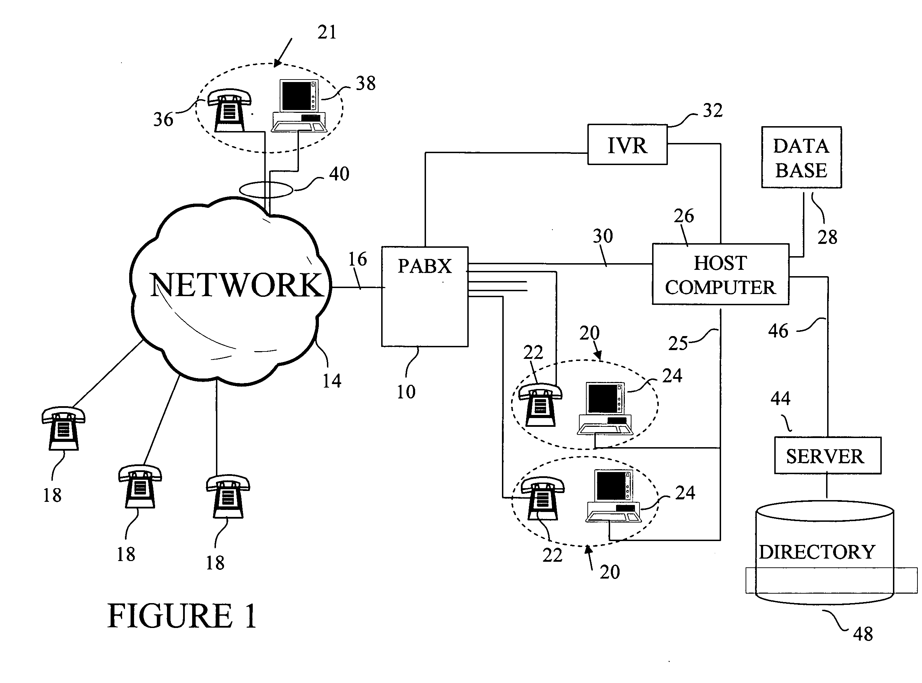

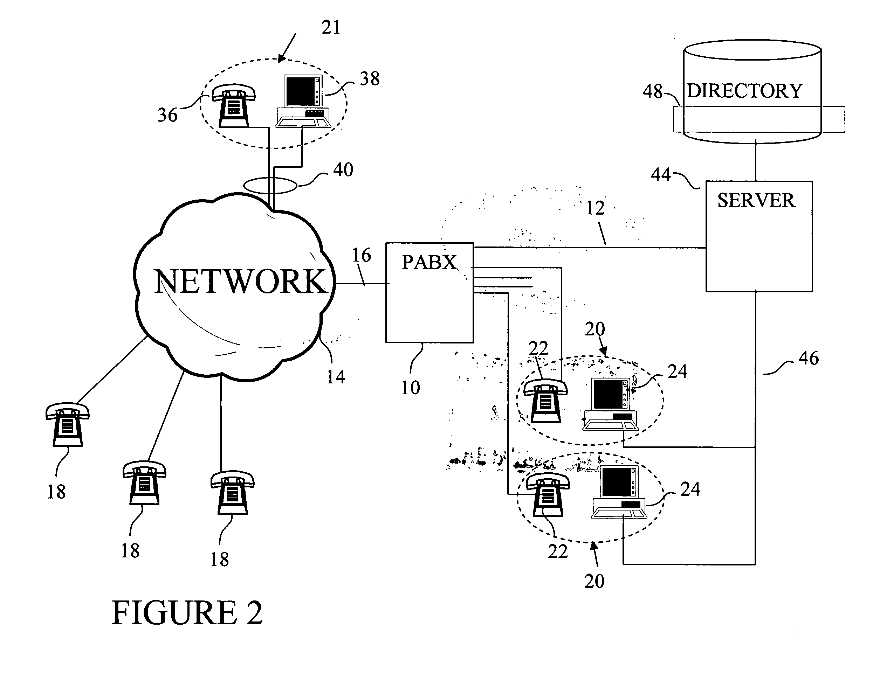

The Figures 1 and 2 show schematically computer telephony systems according to embodiments of the invention.

The Figure 1 shows a computer-telephony system suitable for implementing the present invention and comprising the following main components. A communications switch 10, typically a PBX, is connected to a plurality of internal telephony terminals 22, typically extensions to the PBX. The communications switch 10 may also be connected to an external communications network 14, itself with a number of external telephony terminals 18. Typically, the networks and terminals will be capable of handling voice telephony calls. Users of the internal communications network, represented by telephony terminals 22, can make calls via the communications switch to other internal or external telephony terminals by dialling the published directory number (DN) of the desired destination telephony terminal. These calls are received at the communications switch 10 and routed to the desired destination, if accessible.

Whenever a call is made via the communications switch 10 from an internal telephony terminal, the switch receives a code identifying the calling telephony terminal. This code is known as the calling line identity (CLI). The CLI may be used inside the communications switch 10 and may be passed to the destination to allow the called party to know the origin of the call. Typically, the CLI contains the directory number (DN) of the calling telephony terminal.

Each user of an internal telephony terminal also has access to and use of a computer terminal 24. Each telephone terminal 22 can be combined with a computer terminal 24 to form a user workstation 20, as indicated in the Figure by a dashed line enclosing the two. Computer terminals 24 are arranged in communication with the host computer 26 or second server 44, e.g. via a local area network (LAN) 25, 46. The host computer 26 corresponds to the iBridge server in the BT iBridge computer telephony system. Each computer terminal 24 is provided with software to support interaction with the host computer for controlling and using telephony functions. Second server 44 and associated directory database 48 comprise a third-party system, i.e. external to the computer telephony system based on host computer 26 and communications switch (PBX 10). Directory database 48 stores user-related information including user contact details such as the directory number (DN) of the user's telephony terminal and the user's email address.

Host computer 26 has an associated database store 28 and is connected to the communications switch 10 via computer-telephony link 30. By this means, a user has the possibility to send from their computer terminal via host computer 26 commands to the communications switch for controlling, via the switch, the operation of the user's internal telephony terminal. There is a need in such computer telephony systems to ensure that a user is only granted control over a telephone that they are able to and entitled to use, i.e. a telephone situated close to the user. External user's also have access to host computer 26. External workstation 21 comprises communications terminal 36 and computer terminal 38. A user at remote workstation 21 can make calls via public communications network 14, communications links 16, 40 and communications switch (PBX 10) to internal communications terminals 22 and IVR system 32 by dialling a published directory number for the desired destination. Communications link 40 is capable of supporting voice and data communication over different channels, such as in an ISDN link. The remote user activates computer terminal 38 which autodials the directory number of the host computer 26. When a connection (using one of the B channels) has been established via the ISDN link 16, the remote user logs on to host computer 26 using an identification protocol including informing the host computer 26 of the directory number being currently used by the remote user, and the host computer 26 will store the remote user's directory number in association with the identity of remote user. Alternatively, if the remote user only has rights to log on from a fixed location, the remote user does not inform the host computer 26 of the identity of the remote terminal and the host computer 26 refers to the remote user's record in database 28 and retrieves the appropriate data. Once logged on the remote user is able to interact with host computer 26 in a similar way to local users at computer terminals 24.

Registration of a telephone so as to grant the user control over it is achieved as follows. Interactive voice response system (IVR) 32 also is connected to a port of the communications switch 10 and to the host computer 26. The IVR system is allocated one or more directory numbers (DN) and the user may make a call to the IVR system in a similar way as to any of the telephony terminals 22. The IVR system is arranged to obtain data from callers who call a directory number allocated to the IVR system and to pass this data to the host computer 26 for processing, as appropriate. In Figure 1, only two internal telephony terminals 22 are shown for clarity although there may in reality be hundreds or thousands of users each with an internal telephony terminal connected to a single switch/ server combination.

The user also has access via their computer terminal 24 and host computer 26 to a second server 44 for data processing and office automation tasks, including email, internet access and instant messaging. According to an alternative embodiment, the user accesses the host computer 26 via the second server and network connection 46 between the two.

A pre-existing parameter associated in the third party system with the user may be used as the key to identifying the user. For example, in the Microsoft system, a user is identified by their Session Initiation protocol (SIP) URI. According to the present invention, on registration of a user, iBridge selects a suitable user identifier known to the third-party system, e.g. a field in the user's AD database record. When a user of a third-party system now instigates a telephony operation on their client, for example Microsoft OC running on their computer terminal 24, this is communicated to the third-party server, for example Microsoft LCS (second server 44), which forwards an appropriate computer telephony command in the form of a SIP message to the iBridge system. When the iBridge server (host computer 26) receives the command from the third-party system, it looks for the SIP URI field in the header of the SIP message, rather then the DN field. It identifies the user's SIP URI held in this field as the registration key and then performs a look-up to retrieve the corresponding DN, as before. The rest of the operation is as before. This is secure because the user has no access to the SIP URI in the header of a SIP message. It is not necessary to notify the third-party system of the link between the registration key and the user

Operation of the above computer telephony system will now be described in detail. According to the embodiment described here, the third party system comprises a Microsoft LCS running on second server 44 and Active Directory comprised in directory database 48.
1. A user, via a browser on their computer terminal 24, accesses a registration web page hosted by the iBridge server 26. The web page contains the phone number DN of the IVR system 32, and a random code word generated by the iBridge server
2. The user dials the number of the IVR given on the registration web page from the telephone 22 the user wishes to register. The IVR system is programmed to respond to such calls by prompting the user for the code word provided to the user by the host computer and also by obtaining, in known fashion, the CLI and hence the DN of the telephony terminal used to make the call. The user is able to enter the code word as DTMF digits on the key-pad of the telephony terminal. The IVR system passes the digits received from the user in response to the prompt for the code word and the DN derived from the CLI to the iBridge Server.
3. The iBridge Server compares the digits received from the IVR to the code word it displayed on the web page. If they match, it identifies the DN of the user's telephone 22 from the CLI received from the IVR.
4. The first time the user performs a registration, a parameter that is used by the second system is selected by the iBridge system as the registration key. The parameter is chosen so as to uniquely identify the user and, as such will be closely associated with the user in the second system and, according to a preferred embodiment, will be used by the second system to identify the user. Following the example given above, the parameter may be the user's SIP URI. The DN of the phone 22 is then written to the iBridge server database 28 alongside the registration key. The record written to the iBridge server database would be of the form:
   iBridge UserName: laurie
      DN: 697733
      RegistrationKey: sip:laurie.booton@bt.com
      Cookie: 8263904739347459373937490478439

The user is identified to the iBridge system by the internal iBridge username. It is not necessary to refer to a third-party username as identification of the user to the third party system is performed by the registration key: in this case the SIP URI supplied by the third-party LCS from the AD database. When the LCS sends a message, on behalf of a user, it will include the user's SIP URI in the message in a predetermined field so that the recipient knows which user the message relates to. Alternatively, the user name might actually be the user's SIP URI. The record written to the iBridge Server Database would be of the form:
**UserName: sip:laurie.booton@bt.com**
   DN: 698844
   RegistrationKey: sip:laurie.booton@bt.com
   Cookie: 8263904739347459373937490478439

In any case, iBridge is able to obtain a verified SIP URI from messages sent by the third-party system relating to the user and sets this as the "registration key" in its internal database. If the registration key is read from these messages, no access is required by iBridge to the third party database, e.g. AD. According to a further embodiment, the registration can be set up, as above, but using the contents of a selected pre-existing field in the third-party database as registration key. Instead of reading the parameter from a message received from the third-party system, the ibridge system may read the parameter direct from the third-party database, if appropriate read access is available. In neither case is write access to the third party database required.

The cookie field is optional to support a further aspect of the invention in which the registration key is also written to the user's web browser on the user's computer terminal 24 (in the form of the browser cookie, shown above), to enable applications in which, the user accesses the computer telephony server direct from their computer terminal without exploiting the functionality of the third party system.

Selection of the registration key is a one-off action that only occurs on first registration by a user. Upon receiving any registration request from a user, the iBridge system searches the database for an existing entry for that user; checking for that user's username. If the user's request is for a re-registration, the iBridge system detects that a previous record exists in the iBridge database for this user. Alternative means may be used to identify a previous registration, for example, by means of the cookie set in the user's browser. When it is verified that the user is performing a re-registration, rather than a first registration, the only effect will be to change the DN value stored in the user's iBridge database record in association with the registration key. Nothing needs to be changed in the third-party database. An optional information message might be sent to the third-party system, for the comfort of the user.

The amended record written to the iBridge Server Database would be of the form:
iBridge UserName: laurie
   **DN: 698844**
   RegistrationKey: sip:laurie.booton@bt.com
   Cookie: 8263904739347459373937490478439

Advantageously, the registration key derived from the third-party and stored in the iBridge Database is unaffected by this change of communications terminal. Also advantageous is the fact that the effect of the re-registration upon the third-party system is practically instantaneous.

Some systems may not use the SIP URI and so an alternative identifier is required. This could be any field that is associated in the third-party system uniquely with the user. For example: a user's national insurance number may form part of the user's record stored on the third-party system. This alternative identifier could be preset in the iBridge system as the registration-key field. This alternative identifier could also be used by iBridge to identify the user to the third party system.

The third-party system is securely enabled for computer telephony as the user is not able to change the SIP URI used by the third-party system. Similarly, the third-party system will not know the mappings from the registration keys to the communications terminal identifiers. This allows the user to issue computer telephony commands from their computer terminal via the third-party system without any reduction in security.

When a user of a third-party system instigates a telephony operation on their client, for example Microsoft OC running on their computer terminal 24, this is communicated to the third-party server, for example Microsoft LCS, which forwards an appropriate computer telephony command to the iBridge system. The command from the third-party system will refer to the parameter selected by the iBridge system as the registration key. It is only when the message with the registration key reaches the iBridge server (host computer 26) that it is identified by the iBridge server with the DN of a specific communications terminal 22. The iBridge server translates the registration key to the appropriate DN indicated in the iBridge database 28. In response to the command, the iBridge server then proceeds to forward a command using the appropriate DN value to the communications switch (PBX 10) so as to control telephony operations relating to the selected communications terminal 22.

Conversely, when the communications switch (PBX 10) informs the iBridge server of an incoming call or other telephony event, it will do this with reference to the appropriate DN. In order to inform the Microsoft LCS Server 44, and thereby the user, of the event, the iBridge server 26 swaps the reference to the DN with reference to the corresponding registration key.

The present invention also applies to operation involving external communications terminals 18, 36. The remote user can log on from external computer terminal 38 to host computer 26 as described earlier. Once logged on, the external user has full access to the computer telephony system including the ability to register with the iBridge system and to issue computer telephony commands for processing by iBridge as described in the earlier embodiments, above.

The above description is based on distinct computer telephony, e.g. iBridge, server and communications switch (PBX 10) however, the present invention also applies to systems in which the functionality of the computer telephony server is integrated into the switch. Figure 2 shows a system in which the third party server 44 interfaces directly with the communications switch (PBX 10). Features common to Figures 1 are labelled consistently and only those aspects that have changed will be described here.

The communications switch 10 of Figure 2 integrates functionality located in the host computer in the arrangement of Figure 1. Apart from the iBridge server and related computer telephony software, database store 28, interactive voice response system (IVR 32) and computer telephony link 30 are also integrated with the communications switch 10. Computer terminals 24 are now arranged in direct communication with second server 44, e.g. via a local area network (LAN) 46. The second server 44 is now connected to the communications switch 10 via link 12. By this means, a user has the possibility to send from their computer terminal, via second server 44, and the iBridge logic integrated with the communications switch, commands to the communications switch for controlling, via the switch, the operation of the user's internal telephony terminal.

Registration of a telephone so as to grant control over it to the user is achieved as before except that the major components are now integrated. As before, the user has access via their computer terminal 24 to second server 44 for data processing and office automation tasks, including email, internet access and instant messaging. According to this embodiment, the user also accesses the iBridge computer telephony functionality via the second server.

In the above, we have described how the invention enables a single third-party system for telephony integration. We have also, as an option, written a browser cookie to enable computer telephony control for the user direct from their computer terminal to the host computer, without involving the third party system. This is BT's original "ClickDial" system. However, the invention can enable further third-party systems either by selecting a suitable parameter in common use and associated with the user in each of a number of third-party systems or by selecting different parameters for various different third party systems and recording each parameter in the iBridge server computer telephony data base 28 alongside the DN of the communications terminal 22. Fundamentally, one iBridge server, with one database record for a particular user, can enable many different third-party systems. The iBridge server simply translates a registration key received from a third-party system to the DN associated with a particular user with reference to the computer telephony database entries for that third-party system. The invention has been described in terms of the user selecting a communications terminal but also extends to systems where the choice of communications terminal rests with a third party, such as a system administrator on behalf of the user.

This invention extends earlier techniques to add the security enjoyed by ClickDial users to a third-party system, for example, the Microsoft OC/LCS (Office Communicator/ Live Communications Server) system. It could equally be applied to similar third-party systems. A main difference here is that registration provides registration for the life of a particular system. Re-registration changes the DN controlled by the existing registration, rather then creating a new registration. Hence, the registration key has become abstract. The registration key may be securely shared with an external, third-party system, without the need for rewriting. In schemes that require the writing of the registration key to the third-party system, significant delays can be introduced while the key ripples through the various third-party systems. These delays could result in the user remaining in control of their original DN and not obtaining control over their new DN for a period of time following completion by the user of the re-registration process. The invention advantageously avoids the time delays characteristic of the writing and re-writing the registration key to the third-party system.

The invention is not restricted to a simple telephony terminal but may comprise alternative forms of communications terminals, e.g. those providing communication via text, video or graphics. Advantageously, once registered with the host computer, the user may apply to the IVR for control of a different telephony terminal at any time without the need to repeat the whole registration process. Advantageously, the association of the registration key to directory number is only known to the registration server (e.g. iBridge) so reducing the risk of a party inadvertently or fraudulently obtaining control of a telephony terminal allocated to another user.

Whereas the specific embodiments described above are based on a switch in the form of a PBX, it will be appreciated that the present invention embraces other forms of communications controller supporting switching and routing functions. For example, the communications controller can be a public network switch, such as a Nortel DMS100 switch which is used in known computer telephony arrangements in conjunction with a CompuCall computer telephony controller; and other forms of switching function include switches known as Automatic Call Distributor (ACD), Interactive Voice Response (IVR), and server PBX. Furthermore, the type of switching is not limited to any one form, and, in addition to switched circuit technology, includes Asynchronous Transfer Mode (ATM) switching, and Voice over Internet Protocol (VoIP) routing. With regard to this last example, the communications controller can be a PBX having an Internet Card, or it can be a general purpose computer, e.g. one running Windows NT, having an Internet card, e.g. a Dialogic Internet card. Thus, it can be seen that in general the present invention can be implemented in any computer-controlled switch or router, by means of a suitable controlling program.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. Embodiments of the invention may be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as re-programmable logic gate arrays. Similarly the code may comprise code for a hardware description language such as Verilog TM or VHDL (Very high speed integrated circuit Hardware Description Language) or industry equivalents. As the skilled person will appreciate, the code may be distributed between a plurality of coupled components in communication with one another.

## Claims

1. A method of operating a computer telephony controller in a computer telephony system comprising a plurality of communications terminals in which each communications terminal has an identifier;
the method including the steps of selecting a key and recording in the computer telephony controller a mapping linking the key with the identifier of a communications terminal;
in which the communications terminal is associated with a user;
in which the selected key is a parameter associated with the user in a second system external to the computer telephony system and accessible by the user; so that the user may exercise control over the communications terminal via the second system.

2. A method as claimed in claim 1 including the steps of receiving a message from the second system in which the message comprises a command issued by the user and the key; reading the key received in the message; retrieving the identifier linked to the received key; and forwarding the command and the identifier to the communications controller for controlling operation of the communications terminal.

3. A method as claimed in any above claim in which the selected key is also a parameter associated with the user in a third system external to the computer telephony system and accessible by the user; the method including the steps of receiving a message from the third system in which the message comprises a command issued by the user and the key; reading the key received in the message; retrieving the identifier linked to the received key; and forwarding the command and the identifier to a communications controller for controlling operation of the communications terminal.

4. A method as claimed in any above claim in which the key is a user identifier in the second system and/or the third system.

5. A method as claimed in any above claim in which the key is a component of messages relating to the user received from the second system and/or the third system.

6. A method as claimed in any above claim in which the key is a SIP URI associated with the user in the second system and/or the third system.

7. A method as claimed in any above claim including the steps of selecting a second key and recording a mapping linking the second key with the identifier of the communications terminal; in which the second key is a parameter associated with the user in a further system external to the computer telephony system and accessible by the user; the method including the steps of receiving a message from the further system in which the message comprises a command issued by the user and the second key; reading the second key received in the message; retrieving the identifier linked to the received second key; and forwarding the command and the identifier to a communications controller for controlling operation of the communications terminal.

8. A method as claimed in claim 7 in which the second key is a user identifier in the further system.

9. A method as claimed in any of claims 7 to 8 in which the second key is a component of messages relating to the user received from the further system.

10. A method as claimed in any of claims 7 to 9 in which the second key is a SIP URI associated with the user in the further system.

11. A method as claimed in any above claim including the step of changing the mapping so as to link the key or the second key, as the case may be, with the identifier of a second communications terminal; so that a user may exercise control over different communications terminals at different times via one of the second, third and further system, as the case may be.

12. A method of operating a computer telephony controller in a computer telephony system comprising a communications controller and a plurality of communications terminals in which each communications terminal has an identifier;
the method including the steps of selecting a key and recording a mapping linking the key with the identifier of a communications terminal;
in which the communications terminal is associated with a user;
in which the selected key is a parameter associated with the user in a second system external to the computer telephony system and accessible by the user; the method including the steps of receiving a message from the second system
in which the message comprises a command issued by the user and the key; reading the key received in the message; retrieving the identifier linked to the received key; and forwarding the command and the identifier to the communications controller for controlling operation of the communications terminal.

13. A computer telephony controller comprising means for
selecting a key and recording a mapping linking the key with the identifier of a communications terminal; in which the communications terminal is associated with a user;
in which the selected key is a parameter associated with the user in a second system external to the computer telephony system and accessible by the user;
in which the computer telephony controller comprises means for receiving a message from the second system in which the message comprises a command issued by the user and the key; means for reading the key received in the message; retrieving the identifier linked to the received key; and forwarding the command and the identifier to a communications controller for controlling operation of the communications terminal.

14. A computer telephony controller as claimed in claim 13 in which the key is a user identifier in the second system.

15. A computer telephony controller as claimed in any of claims 13 to 14 in which the key is a component of messages relating to the user received from the second system.

16. A computer telephony controller as claimed in any of claims 13 to 15 in which the key is a SIP URI associated with the user in the second system.

17. A computer telephony controller as claimed in any of claims 13 to 16 comprising means for changing the mapping so as to link the key with the identifier of a second communications terminal; so that a user may exercise control over different selected communications terminals at different times via the second system.

18. A server for communicating with a communications controller connected to a communications terminal in which the server comprises a key linked to a user;
in which the server also comprises means for receiving from the user a command and means for forwarding the command and the key to the communications controller via a system for translation of the key into the identifier of the communications terminal;
so that the user is able to control the communications terminal via the server.

19. A server as claimed in claim 18 in which the key is suitable to be processed by the server as a communications terminal identifier.

20. A server as claimed in any of claims 18 to 19 in which the key is suitable to be stored in the server in a directory number database.

21. A server as claimed in any of claims 18 to 20 in which the key is a user identifier in the server.

22. A server as claimed in any of claims 18 to 21 in which the key is a component of messages relating to the user generated by the server.

23. A server as claimed in any of claims 18 to 22 in which the key is a SIP URI associated with the user.

24. A method of operating a computer telephony controller in a computer telephony system comprising a communications controller and a plurality of communications terminals in which each communications terminal has an identifier;
the method including the steps of selecting a key or plurality of keys and recording a mapping linking the key or keys with the identifier of a communications terminal;
in which the communications terminal is associated with a user;
in which the selected key is a parameter or the selected keys are parameters associated with the user in a plurality of systems external to the computer telephony system and accessible by the user;
the method including the steps of receiving a message from one of the external systems in which the message comprises a command issued by the user and the key or one of the keys, as the case may be; reading the key received in the message; retrieving the identifier linked to the received key; and forwarding the command and the identifier to the communications controller for controlling operation of the communications terminal.

25. A method as claimed in claim 24 including the step of changing the mapping so as to link the key or the plurality of keys, as the case may be, with the identifier of a second communications terminal; so that a user may exercise control over different communications terminals at different times via the external systems.

26. A computer telephony controller comprising means for
selecting a key or plurality of keys and recording a mapping linking the key or keys with the identifier of a communications terminal;
in which the communications terminal is associated with a user;
in which the selected key is a parameter or the selected keys are parameters associated with the user in a plurality of systems external to the computer telephony system and accessible by the user;
in which the computer telephony controller comprises means for receiving a message from one of the external systems in which the message comprises a command issued by the user and the key or one of the keys, as the case may be; means for reading the key received in the message; retrieving the identifier linked to the received key; and forwarding the command and the identifier to a communications controller for controlling operation of the communications terminal.

27. A computer telephony controller as claimed in claim 26 comprising means for changing the mapping so as to link the key or the keys, as the case may be, with the identifier of a second communications terminal; so that a user may exercise control over different selected communications terminals at different times via the external systems.

28. A computer telephony system comprising one of the controller as claimed in any of claims 13 to 17, 26 and 27 and the server as claimed in any of claims 18 to 23.

29. A communications system comprising one of the controller as claimed in any of claims 13 to 17, 26 and 27 and the server as claimed in any of claims 18 to 23.

30. A carrier medium carrying a computer program or set of computer programs adapted to carry out, when said program or programs is run on a data-processing system, each of the steps of the method of any of claims 1 to 12, 24 and 25.
